Europäisches Patentamt

European Patent Office

Office européen des brevets

(19)

(11) Numéro de publication : **0 022 030**
**B1**

(12) **FASCICULE DE BREVET EUROPÉEN**

(45) Date de publication du fascicule du brevet :
**11.05.83**

(21) Numéro de dépôt : **80400968.6**

(22) Date de dépôt : **27.06.80**

(51) Int. Cl.³ : **G 21 C 11/08**, G 21 C 15/24

(54) **Dispositif d'homogénéisation, dans le sens circonférentiel des températures à la surface d'une virole soumise à un gradient circonférentiel de température.**

(30) Priorité : **29.06.79 FR 7916912**
**29.06.79 FR 7916915**

(43) Date de publication de la demande :
**07.01.81 Bulletin 81/01**

(45) Mention de la délivrance du brevet :
**11.05.83 Bulletin 83/19**

(84) Etats contractants désignés :
**BE DE GB IT NL**

(56) Documents cités :
**GB A 1 412 764**

**REVUE GENERALE DE THERMIQUE, Tome 18, no. 208, avril 1979 Paris FR MONTMAYEUR : « Applications récentes des caloducs au Centre d'études nucléaires de Grenoble », page 223-227.**

**REVUE GENERALE DE THERMIQUE, Tome 16, no. 192, décembre 1977 Paris FR MARTINET : « Les caloducs et leurs applications », pages 865-880.**

(73) Titulaire : **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur : **Garnier, Jacques**
**154 avenue Victor Hugo**
**F-38170 Seyssinet (FR)**
Inventeur : **Martin, Robert**
**2, Avenue Albert 1er-de-Belgique**
**F-38000 Grenoble (FR)**
Inventeur : **Aubert, Michel**
**Chemin de Sainte Roustagne**
**F-04100 Manosque (FR)**
Inventeur : **Bret, Antoine**
**Les Louves d'Entremont Chemin de la Rose**
**F-13100 Aix en Provence (FR)**
Inventeur : **Lemercier, Guy**
**67, Avenue de la Bourgade**
**F-13610 Le Puy Sainte Reparade (FR)**
Inventeur : **Montmayeur, Jean-Denis**
**3, rue du Drac**
**F-38120 Saint Egreve (FR)**
Inventeur : **Sauvage, Michel**
**Parc Laurana.Bât.A. Traverse Malakoff**
**F-13100 Aix en Provence (FR)**
Inventeur : **Teytu, André**
**27, rue Mailligand**
**F-38000 Grenoble (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

# Dispositif d'homogénéisation, dans le sens circonférentiel des températures à la surface d'une virole soumise à un gradient circonférentiel de température

La présente invention se rapporte à un dispositif d'homogénéisation dans le sens circonférentiel des températures à la surface d'une virole soumise à un gradient circonférentiel de température.

On rencontre fréquemment dans les installations industrielles des viroles soumises à un gradient circonférentiel de température. En particulier, lorsqu'un élément cylindrique traverse une paroi telle que par exemple une dalle de béton ou encore un mur, un espace annulaire résulte du jeu existant entre ledit élément cylindrique et la paroi qu'il traverse. S'il existe une différence de température entre les deux faces de la paroi, des courants de convection apparaissent au sein du fluide remplissant l'espace annulaire. Ces courants tridimensionnels de convection naturelle, appelés « jambages », se caractérisent par une répartition circonférentielle d'écoulements montants, dits « jambes chaudes », ou descendants, dits « jambes froides ». La forme de ces écoulements est très difficile à prédire car elle dépend de nombreux paramètres. De plus, ces écoulements ne sont pas nécessairement permanents et contraignent donc les viroles non seulement à des écarts de températures circonférentiels, mais aussi à des cyclages thermiques préjudiciables à leur bonne tenue mécanique.

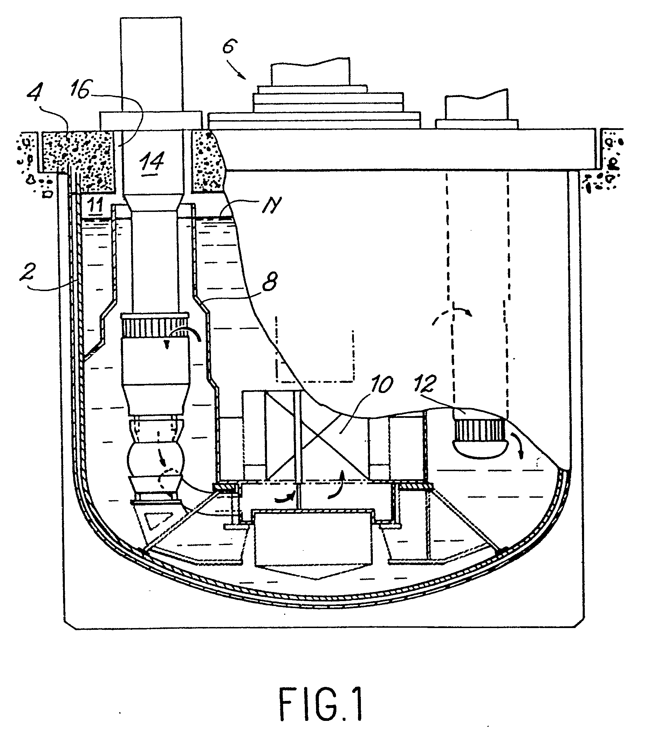

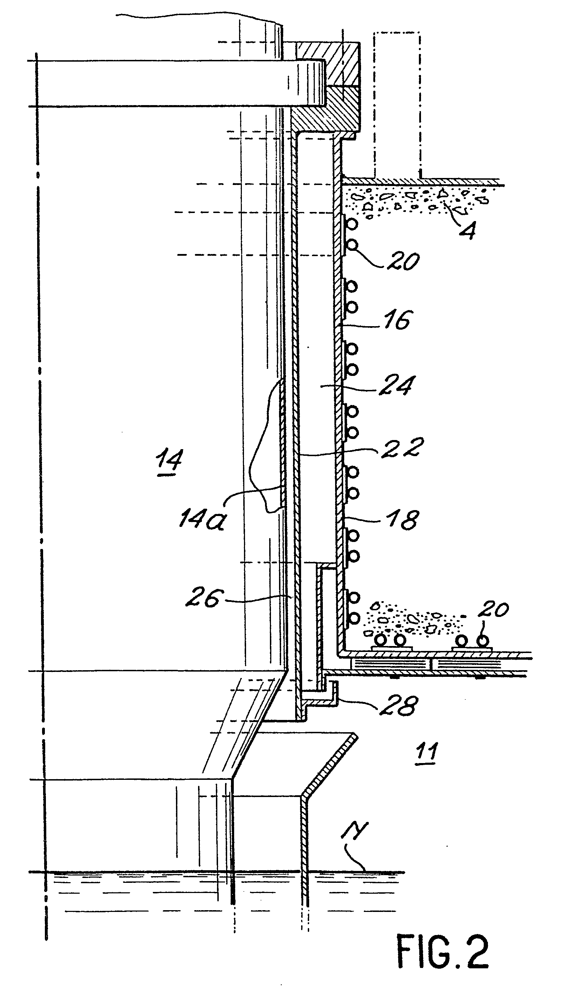

Afin de mieux comprendre le problème que permet de résoudre la présente invention, on se reportera avantageusement aux figures 1 et 2 annexées qui représentent respectivement un réacteur nucléaire à neutrons rapides du type intégré en coupe verticale et une vue de détail montrant comment se fait la traversée de la dalle par une pompe ou un échangeur intermédiaire.

Sur la figure 1 on trouve, représentée de façon simplifiée, la cuve principale 2 du réacteur suspendue à la dalle supérieure 4 en béton munie de son système de bouchons tournants 6. A l'intérieur de la cuve principale 2 on trouve la cuve interne 8 qui contient le cœur 10 et le métal liquide chaud (sodium liquide par exemple) sortant du cœur, le niveau de métal liquide étant référencé en N. Au-dessus du niveau N et en-dessous de la dalle 4 on trouve un matelas 11 d'un gaz inerte de couverture (par exemple de l'argon). Le métal liquide chaud entre dans des échangeurs intermédiaires tels que 12 qui sont suspendus à la dalle 4 et qui traversent celle-ci par des passages cylindriques non représentés. De façon similaire, des pompes de circulation telles que 14 sont suspendues à la dalle 4 et traversent celle-ci par des passages cylindriques 16. L'invention concerne les problèmes liés à cette traversée de la dalle.

Sur la figure 2, on a représenté plus en détail la traversée de la dalle 4 par une pompe 14. La pompe 14 est entourée par une virole de pompe 14a et la dalle 4, au niveau du passage 16 en particulier, est revêtue par une tôle 18, la dalle elle-même étant refroidie par des conduites d'eau 20. Entre la virole 14a de la pompe et la tôle de revêtement 18, on trouve une virole intermédiaire 22 qui définit un espace annulaire externe 24 et un espace annulaire interne 26 (il en est bien sûr de même pour la traversée d'un échangeur intermédiaire). L'espace externe 24 est isolé de la couverture gazeuse 11 par un système de joint hydraulique (sodium liquide) à godet 28. Il ne se pose donc pas de problème pour l'espace externe 24 qui est isolé du reste de la masse gazeuse. Au contraire, l'espace interne 26 communique avec la couverture gazeuse 11.

Dans l'espace interne 26, il apparaît des thermosiphons « ouverts » qui sont alimentés par le gaz inerte contenu dans la région 11. Ces thermosiphons sont caractérisés par un écoulement montant de gaz chaud et par un écoulement descendant de gaz refroidi. Leurs caractéristiques dépendent de paramètres qui sont mal connu actuellement.

Ces thermosiphons engendrent dans la virole du composant (échangeur intermédiaire ou pompe) des empreintes thermiques qui peuvent se déplacer circulairement (dans un plan horizontal) et qui créent ainsi des cyclages thermiques préjudiciables à la bonne tenue mécanique des viroles correspondantes.

Il faut donc éliminer ou au moins diminuer ces gradients thermiques circonférentiels. A titre d'exemple, dans le cas du réacteur français Super Phénix, la différence maximum entre deux points circonférentiels de la virole de pompe est estimée par des calculs à 200 °C.

Une solution consisterait à choisir pour ces viroles un matériau possédant une conductibilité thermique élevée. Une telle solution est inacceptable. D'une part parce que le choix d'un tel matériau est très limité pour des raisons de coût et de tenue mécanique, et d'autre part, et surtout, du fait qu'il est nécessaire de maintenir un gradient thermique vertical important entre l'espace 11 ou ciel de pile et le haut de la dalle 4. En effet, l'extrémité supérieure de la dalle doit être maintenue à une température maximale de l'ordre de 50 °C.

On connaît dans l'état de la technique, en particulier par le brevet britannique GB-A-1 412 764 un dispositif de contrôle du gradient de température à la surface de la cuve interne qui contient le caloporteur liquide (sodium) d'un réacteur nucléaire refroidi au sodium liquide.

La cuve interne d'un tel réacteur est fermée à sa partie supérieure par une dalle ou un couvercle maintenu à une température inférieure de l'ordre de 350 °C à celle du niveau de la surface du fluide caloporteur. La partie supérieure de la paroi de la cuve interne située au-dessus de ce niveau est pourvue sur sa face interne d'une isolation thermique et sur sa face externe d'une pluralité de circuits individuels de refroidissement répartis sur la hauteur à différents niveaux par rapport au bord supérieur de la paroi de la cuve.

Chacun de ces circuits individuels de refroidissement est en contact thermique avec la paroi externe de la cuve et pourvu de moyens de circulation d'un réfrigérant à une température prédéterminée qui dépend de la hauteur. La capacité de transfert de chaleur de ces circuits de refroidissement est bien supérieure au transfert de chaleur à travers une zone correspondante de ladite isolation thermique.

Cependant, dans un dispositif de ce type, il est nécessaire que chaque paire de tubes soit connectée séparément à une pompe de circulation et à des moyens échangeurs de chaleur de manière à maintenir la température du réfrigérant circulant dans chaque paire de tubes à une valeur déterminée.

La présente invention a précisément pour objet un dispositif d'homogénéisation dans le sens circonférentiel des températures à la surface d'une virole soumise à un gradient circonférentiel de températures qui remédie à cet inconvénient. Ce dispositif permet de réduire d'une manière importante la valeur de ce gradient de température, et par suite, de diminuer les cyclages thermiques auxquels lesdites viroles sont soumises, tout en maintenant le gradient thermique vertical nécessaire et tout en utilisant des matériaux nucléaires classiques pour réaliser les viroles.

Plus précisément, selon un premier mode de réalisation ce dispositif d'homogénéisation se caractérise en ce que les moyens pour transférer de la chaleur sont constitués par au moins un anneau creux fermé rempli par un liquide, ledit anneau se composant d'une succession de segments inclinés par rapport à l'horizontale, des moyens de fixation dudit anneau sur l'une des faces de ladite virole, et des moyens pour assurer un contact thermique entre chacun desdits anneaux et ladite virole, des vases d'expansion étant prévus aux points les plus hauts des segments inclinés.

Bien entendu, dans la description qui précède, du dispositif d'homogénéisation dans le sens circonférentiel des températures à la surface d'une virole, l'expression « dans le sens circonférentiel » doit être comprise au sens large. En effet, l'invention s'applique à toute virole, circulaire ou non, soumise à un gradient de température selon une de ses sections droites. Il va de soi que le terme « anneau » doit être compris dans le même esprit, et que la forme de cet anneau n'est pas nécessairement circulaire.

Dans le cas particulier où la virole soumise à un gradient circonférentiel de température est à axe vertical, ledit anneau creux se compose d'une succession de segments inclinés par rapport à l'horizontale. De cette manière, les transferts de chaleur selon une direction verticale sont réduits au minimum, la circulation par convection du liquide s'effectuant cependant d'une manière satisfaisante.

Comme il a été dit plus haut, la forme des écoulements apparaissant dans l'espace annulaire est très difficile à prédire, car elle dépend de nombreux paramètres. On ne peut donc déterminer la position des jambes chaudes, ni celle des jambes froides. C'est pourquoi le dispositif d'homogénéisation selon la présente invention comporte de préférence plusieurs anneaux creux répartis sur la hauteur de la virole et décalés angulairement les uns par rapport aux autres.

De cette manière, l'homogénéisation des températures dans le sens circonférentiel à la surface de la virole reste efficace dans tous les cas d'écoulement des courants de convection.

Selon un second mode de réalisation, les moyens pour transférer de la chaleur sont constitués par au moins un ensemble formant caloduc horizontal ou sensiblement horizontal disposé à l'intérieur de la virole et en contact thermique avec celle-ci. De préférence on trouve plusieurs caloducs espacés sur la hauteur de la virole.

On peut utiliser soit un même caloduc disposé sur sensiblement toute la circonférence de la virole, soit plusieurs caloducs mis bout à bout, chaque caloduc couvrant une fraction de la circonférence.

Dans le cas où les caloducs sont horizontaux, chaque ensemble formant caloduc constitue un anneau et définit ainsi un niveau d'homogénéisation de la température de la virole.

Dans le cas où les caloducs sont légèrement inclinés, (par exemple de l'ordre de 2 degrés) les ensembles de caloducs forment une hélice à plusieurs filets, chaque filet étant formé par plusieurs caloducs mis bout à bout.

Si chaque ensemble formant caloduc est constitué par plusieurs caloducs mis bout à bout et dans le cas où chaque caloduc ne couvre qu'une portion de la circonférence, il peut être intéressant de superposer deux couronnes de caloducs, de telle façon que les extrémités des caloducs d'une couronne soient décalées par rapport aux extrémités des caloducs de l'autre couronne.

De toutes façons, l'invention sera mieux comprise à la lecture de la description qui suit de plusieurs modes de réalisation de l'invention donnés à titre d'exemples non limitatifs. La description se réfère aux figures annexées sur lesquelles :

la figure 1, déjà décrite, représente une vue en coupe verticale d'un réacteur nucléaire à neutrons rapides du type intégré ;

la figure 2, déjà décrite, représente une vue partielle du réacteur de la figure 1, montrant un mode de réalisation de la traversée de la dalle par une pompe ;

la figure 3 représente le premier mode de réalisation de l'invention ;

la figure 4 représente une vue en coupe longitudinale d'un caloduc de type connu ;

la figure 5 représente une demi-vue en coupe verticale d'une traversée de la dalle par la virole d'un composant munie du dispositif d'homogénéisation selon l'invention ;

les figures 5b et 5c représentent des vues partielles montrant des variantes de fixation des caloducs ;

les figures 6a et 6b représentent deux vues en coupe horizontale correspondant respectivement au cas où on utilise un seul caloduc ou plusieurs ;

la figure 6c représente une vue développée illustrant le cas où on superpose deux ensembles de caloducs, et

les figures 7a et 7b représentent des demi-vues en coupe verticale montrant deux variantes d'implantation des caloducs dans la virole d'une pompe.

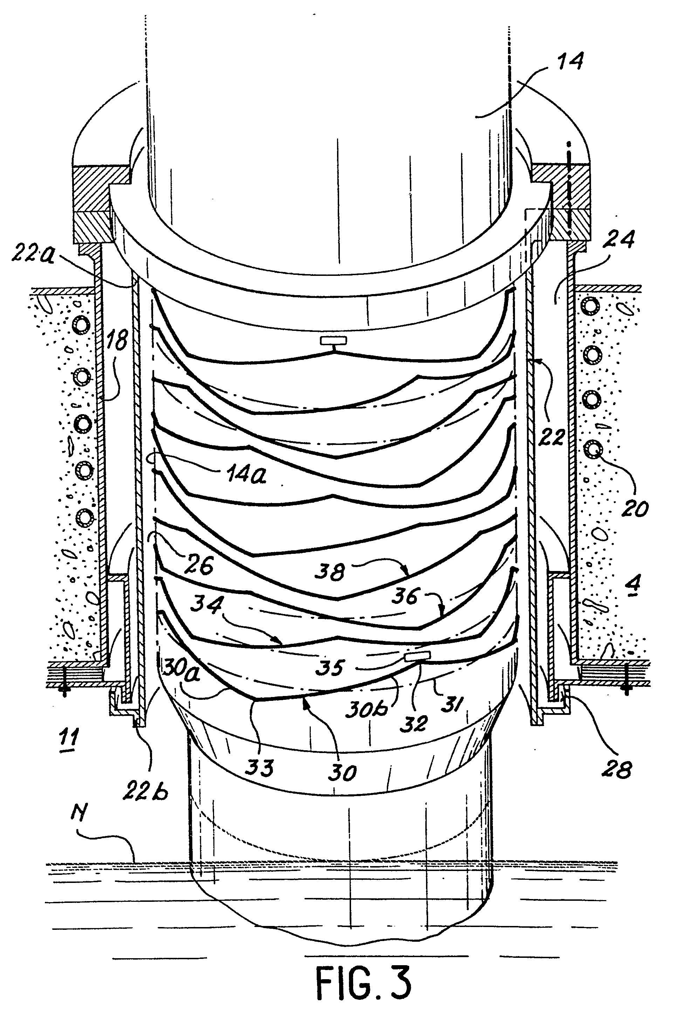

Le procédé d'homogénéisation des températures selon la présente invention trouve une application chaque fois que, dans l'industrie, une virole est soumise à un gradient circonférentiel de températures. En particulier, ce problème se pose fréquemment dans l'industrie chimique et dans l'industrie nucléaire. La figure 3 représente une mise en œuvre avantageuse de ce procédé dans le cas d'un réacteur nucléaire refroidi au sodium. Un tel réacteur nucléaire, par exemple le réacteur français Super Phénix, comporte une cuve suspendue à une dalle de béton. Le cœur du réacteur situé dans la cuve est refroidi par une circulation de sodium liquide. Dans un réacteur de ce type, la traversée de la dalle de béton par les composants nécessaires au fonctionnement du réacteur détermine de nombreux espaces annulaires à l'intérieur desquels naissent des courants de convection. On a représenté sur la figure 3 une telle traversée de la dalle 4 par un composant 14. Ce composant 14 est ici une pompe de circulation. La pompe 14 est entourée par une virole de pompe 14a. On a prévu pour le passage de la pompe 14 à travers la dalle de béton 4, un passage d'un diamètre supérieur au diamètre extérieur de la virole de pompe 14a, ce qui détermine un espace annulaire à axe vertical. Au niveau du passage de la pompe 14, on a revêtu la dalle de béton 4 d'une tôle circulaire 18 qui joue un rôle de protection thermique et qui est elle-même refroidie par une circulation d'eau à l'intérieur des canalisations 20.

On a désigné par la référence N le niveau du sodium liquide. Au-dessus du sodium, on a prévu une couverture 11 de gaz inerte, par exemple d'argon, qui protège la dalle 4 contre le sodium liquide, dont la température atteint 500 °C, et ses aérosols. L'espace annulaire situé entre la virole de pompe 14a et la virole 18 est divisé en deux par une troisième virole à axe vertical 22, laquelle délimite un premier espace annulaire 24 et un deuxième espace annulaire 26. Chacun de ces espaces annulaires est rempli d'argon. En outre, l'espace annulaire 24 est isolé de la couverture d'argon 11 par un système de joint hydraulique à godet 28 rempli de sodium liquide. La lame d'argon emprisonnée à l'intérieur de l'espace annulaire 24 réalise ainsi une protection thermique de la dalle de béton 4, le béton, comme on le sait, supportant mal les contraintes thermiques. En revanche, l'espace annulaire 26 communique avec la couverture de gaz inerte 11, ce gaz étant porté à une température de l'ordre de 500 °C au contact du sodium liquide. En revanche, la température de ce gaz à la partie supérieure de l'espace annulaire 26 ne doit pas dépasser 50 °C. Par conséquent, il existe un important gradient vertical de température entre la partie supérieure 22a de la virole 22 dont la température est de l'ordre de 50 °C et sa partie inférieure 22b dont la température est proche de 500 °C. Toutes les conditions sont donc réunies pour que des thermosiphons apparaissent dans l'espace annulaire 26. Ces thermosiphons sont alimentés par le gaz inerte contenu dans la région 11 et sont caractérisés par un écoulement montant des gaz chauds et par un écoulement descendant de gaz refroidis. Ces thermosiphons, qui dépendent de paramètres actuellement mal connus, engendrent dans la virole du composant 14 des empreintes thermiques qui peuvent se déplacer circulairement dans un plan horizontal et qui créent ainsi des cyclages thermiques préjudiciables à la bonne tenue mécanique de la virole 14a. A titre d'exemple, dans le cas du réacteur français Super Phénix, la différence de température maximum entre deux points circonférentiels de la virole de pompe 2a est estimée à 200 °C.

Il est donc nécessaire d'éliminer ou du moins de diminuer ces gradients thermiques circonférentiels. C'est précisément le problème qui est résolu par le dispositif selon la présente invention, représenté sur la figure jointe. Ce dispositif se compose de plusieurs anneaux creux 30 disposés selon la circonférence de la virole 14a. En traits mixtes, on a représenté la direction moyenne 31 de l'anneau creux 30. Cette direction moyenne 31 est horizontale. Chacun des anneaux 30 est creux et renferme un liquide. Dans le cas du dispositif selon la présente invention représenté sur la figure, ce liquide est du sodium. De cette manière, les conséquences d'une fuite, toujours possible, de l'un des anneaux 30 sont réduites. Cela ne serait pas le cas si l'on avait introduit de nouveaux fluides, par exemple de l'eau, dans le réacteur. On sait en effet que l'eau réagit violemment avec le sodium. Ainsi, le dispositif selon la présente invention ne pose pas de nouveaux problèmes de sûreté et simplifie les problèmes de tenue dans le temps. En conséquence, les anneaux tels que 30 pourront être situés à la surface de la virole 14a indifféremment à l'intérieur ou à l'extérieur de celle-ci. Naturellement, dans un autre cas d'application du procédé selon l'invention, on pourra utiliser un liquide quelconque. L'anneau 30 se compose d'une succession de segments 30a, 30b, 30c inclinés de quelques degrés par rapport à l'horizontale, indiquée par la référence 31. Dans la mesure où une extrémité supérieure, par exemple l'extrémité 32 du segment incliné 30b se trouve dans une zone de la virole 14a refroidie par un écoulement de gaz descendant, et dans la mesure où l'extrémité inférieure 33 de ce même segment 30b se trouve dans une zone chauffée par un courant montant de gaz chaud, la circulation du sodium liquide à l'intérieur de ce tube 30b se fait par convection naturelle. La chaleur est ainsi transportée de la zone chaude où se trouve le point 33 à la zone froide où se trouve le point 32 et une homogénéisation des températures dans le sens circonférentiel de la virole 14a est ainsi réalisée. Cependant, comme il a été indiqué précédemment, les caractéristiques des thermosiphons dépendent de paramètres qui sont difficiles à déterminer. C'est la raison pour laquelle il n'est pas possible de déterminer l'emplacement des jambes montantes chaudes et des jambes descendantes froides. De ce fait, il n'est pas possible de disposer idéalement les sommets 32 selon les jambes froides et les extrémités 33 selon les jambes chaudes. C'est la raison pour laquelle on a décalé angulairement les uns par rapport aux autres les anneaux tels que 34, 36, 38, etc. De cette manière, l'homogénéisation dans le sens circonférentiel des températures est réalisée dans tous les cas d'écoulement extérieur du gaz inerte.

Afin d'éviter l'éclatement des anneaux 34, 36... il est nécessaire de prévoir, aux extrémités supérieures des segments, par exemple aux sommets 32, des vases d'expansion 35 contenant un gaz inerte. Ainsi, le sodium remplissant les anneaux peut se dilater librement. Les vases d'expansion 35 ne provoquent aucune perturbation des échanges thermiques entre la virole 14a et les anneaux.

On remarquera que le dispositif réalisé selon l'invention homogénéise les températures à la surface de la virole 14a essentiellement dans le sens circonférentiel. En effet, il est nécessaire de conserver un gradient vertical de température, car on souhaite que la température à la partie supérieure de la virole 22 ne dépasse pas 50 °C. Les segments tels que 30a, 30b ou 30c sont inclinés de quelques degrés par rapport à l'horizontale de manière à permettre la circulation de sodium liquide par convection. Cependant, le transfert de chaleur dans un sens vertical est réduit.

Naturellement, afin que le dispositif selon l'invention fonctionne efficacement, il est nécessaire de prévoir un bon contact thermique entre chacun des anneaux tels que 30 et la virole 14a. On pourra à cette fin loger les anneaux 30 dans des pièces formant godet fixées sur la virole 14a, ces godets étant remplis par un matériau bon conducteur de la chaleur. Ou encore, on pourra loger lesdits anneaux 30 dans un espace annulaire étanche limité par la virole 14a et par une deuxième virole interne à la première, un matériau à bas point de fusion et bon conducteur de la chaleur étant introduit dans l'espace délimité par ces deux viroles.

Le dispositif selon l'invention faisant intervenir des caloducs, et quoique ceux-ci soient bien connus, il peut être utile d'en expliquer le fonctionnement avant de décrire plus en détail le dispositif de l'invention.

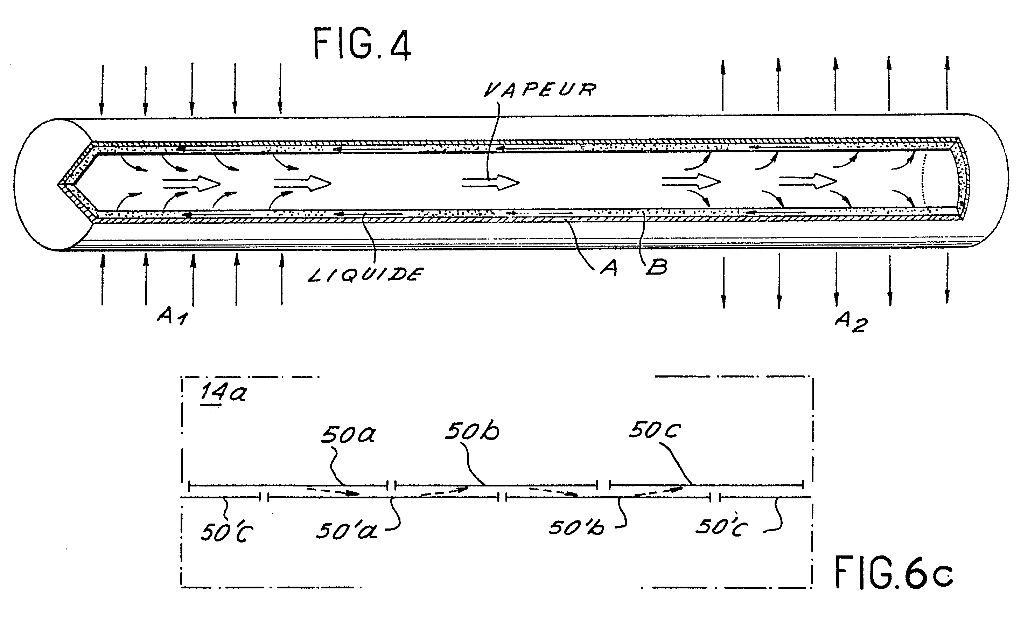

Sur la figure 4, on a représenté un tel caloduc. Il a la forme d'un cylindre étanche défini par une enveloppe A. Le cylindre comporte une extrémité $A_1$ formant évaporateur et une extrémité $A_2$ formant condenseur. La paroi interne de l'enveloppe A est revêtue par une structure capillaire B.

L'enveloppe contient un fluide caloporteur. Le transport de chaleur entre les deux extrémités $A_1$ et $A_2$ se fait par déplacement du fluide caloporteur avec changement d'état. Le fluide se vaporise dans la zone $A_1$ et la vapeur s'écoule vers la zone $A_2$. Le retour du fluide après condensation se fait dans la structure capillaire.

On obtient ainsi une uniformisation de la température au voisinage immédiat de l'enveloppe du caloduc. L'isothermicité de l'appareil provient du fait que sur toute sa longueur le liquide contenu et sa vapeur sont à l'équilibre à tout instant, à la température de saturation.

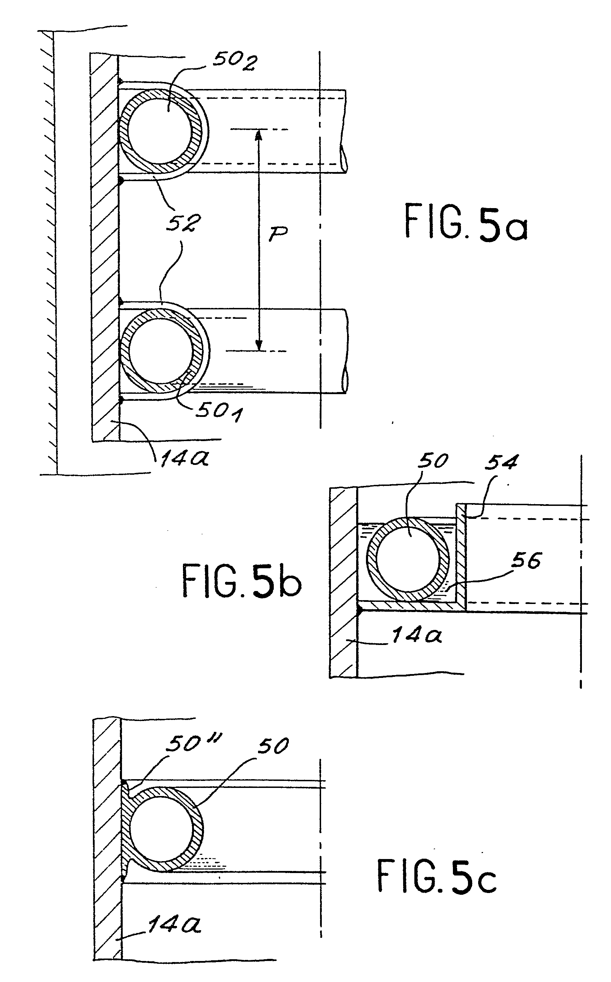

Sur la figure 5a, on a représenté un second mode de mise en place des caloducs sur la virole pour réaliser le dispositif objet de l'invention.

Les caloducs tels que 50 formant des anneaux sont fixés sur la face interne de la virole 14a du composant, les caloducs étant disposés dans des plans horizontaux. Ils sont fixés, selon le mode de réalisation représenté sur la figure 5a, par des pontets 52 soudés sur la virole 14a. Deux caloducs consécutifs $50_1$, $50_2$ sont séparés par un pas $p$ convenable. En fonction de la valeur des écarts de température aux différents niveaux, on peut avoir intérêt à faire varier ce pas sur la hauteur de la virole.

Selon le mode de réalisation de la figure 5b, le caloduc 50 est supporté par un godet annulaire 54 soudé sur la virole 14a. Il peut être intéressant de prévoir un matériau conducteur de la chaleur 56 dans ce godet.

Selon le mode de réalisation de la figure 5c, l'enveloppe A du caloduc 50 comporte une semelle 50″ soudée sur la virole 14a. On assure ainsi un meilleur contact thermique entre la virole et le caloduc.

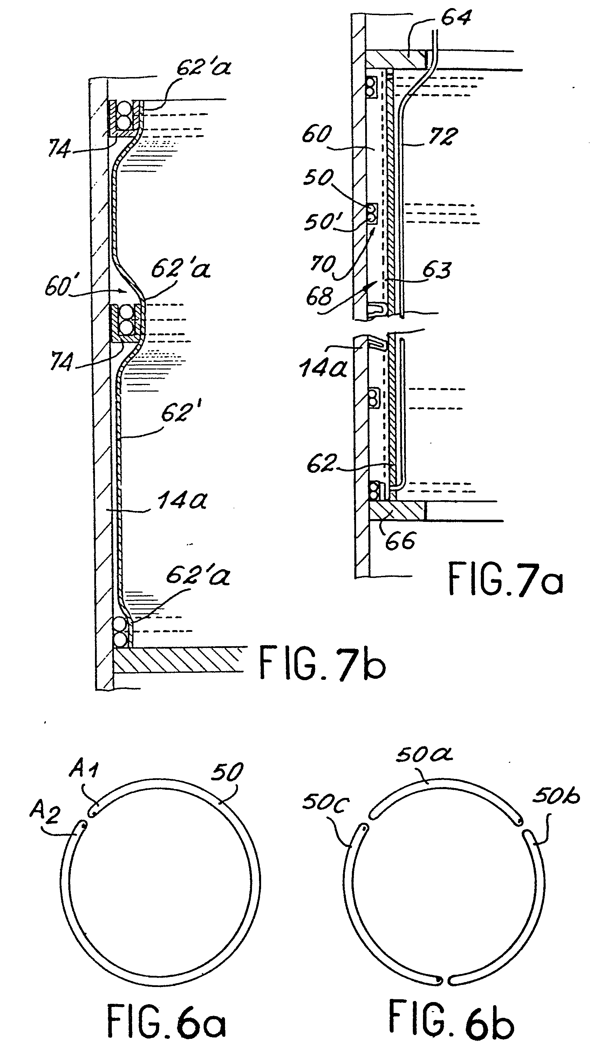

En se référant à la figure 6a, on voit que le caloduc annulaire peut consister en un seul caloduc cylindrique 50 dont les extrémités $A_1$ et $A_2$ sont proches. Il peut être plus simple comme représenté sur la figure 6b de réaliser le caloduc annulaire à l'aide de trois caloducs (par exemple) 50a, 50b, 50c, qui correspondent chacun à un angle au centre de l'ordre de 120°.

Dans le cas de cette variante de réalisation, il est intéressant de réaliser chaque niveau d'homogénéisation à l'aide de deux rangées de trois caloducs superposés (caloducs 50a, 50b, 50c et caloducs 50′a, 50′b et 50′c). Bien entendu, les deux rangées de caloducs appartenant à un même niveau d'homogénéisation sont décalées l'une par rapport à l'autre comme on le voit sur la figure 6c.

Sur la figure 7a, on a représenté plus en détail un autre mode d'implantation du dispositif d'homogénéisation des températures dans la virole 14a de la pompe.

Selon ce mode de réalisation, chaque ensemble comporte deux caloducs superposés 50 et 50′. Ces caloducs sont logés dans un espace annulaire 60 interne à la virole 14a et limité par une virole d'étanchéité 62 qui est soudée à ses deux extrémités sur des rebords horizontaux 64 et 66. L'espace 60 est ainsi étanche. Les caloducs sont maintenus en place contre la virole 14a par des cornières verticales 68 en forme de U, qui sont percées d'œillets 70 pour maintenir les caloducs. Une tuyauterie 72 permet de remplir l'espace 60 avec un matériau métallique à bas point de fusion pour assurer un meilleur contact thermique entre les caloducs et la virole 14a.

Pour réduire la masse de liquide à bas point de fusion et pour diminuer la conduction axiale, on peut utiliser un isolant céramique préformé placé entre les caloducs et la virole d'étanchéité 62. Le volume de liquide est alors réduit. On peut également utiliser un isolant en vrac qui est placé entre la virole d'étanchéité 62 et une grille de maintien 63 placée coaxialement à ladite virole dans ledit espace 60.

Selon la variante de réalisation représentée sur la figure 7b, la virole d'étanchéité 62′ présente des renflements 62′a au droit des groupes de caloducs. Chaque groupe de deux caloducs est logé dans un guide 74 soudé sur la virole 62′. En outre, l'espace annulaire 60′ défini par la virole 14a et la virole 62′ a un volume limité. Le volume nécessaire de matériau à bas point de fusion est donc réduit et la conduction thermique verticale limitée.

Il faut encore préciser que, compte-tenu des températures mises en jeu dans le dispositif objet de l'invention, il paraît préférable d'utiliser comme fluide caloporteur dans les caloducs de l'eau ou du mercure. L'eau présente une plage d'utilisation qui va de 60 à 320 °C. Le mercure présente une gamme d'utilisation de 180 à 650 °C. L'enveloppe et le capillaire des caloducs sont réalisés en acier inoxydable par exemple de la nuance AISI304 L, AISI316 L, ou AISI347 L.

Il est important de noter que, du fait que les caloducs sont disposés à l'intérieur de la virole des composants, des fuites survenant éventuellement dans ces caloducs ne risqueraient pas de provoquer l'introduction du fluide caloporteur dans le métal liquide de refroidissement du réacteur.

Il découle de la description précédente que, grâce aux caractéristiques de l'invention, on obtient une uniformisation sûre et efficace des températures circonférentielles des viroles des composants au niveau de la traversée de la dalle supérieure du réacteur nucléaire.

## Revendications

1. Dispositif d'homogénéisation dans le sens circonférentiel des températures à la surface d'une virole (14a) à axe vertical d'un composant traversant la dalle supérieure (4) d'un réacteur nucléaire, un écoulement montant de gaz chaud déterminant des zones chaudes, et un écoulement descendant de gaz refroidi déterminant des zones plus froides, comprenant des moyens (30, 50) fixés sur l'une des faces de la virole pour transférer de la chaleur d'une zone chaude de la virole (14a) à une zone plus froide de cette virole, ces zones étant situées sur une même circonférence, caractérisé en ce que les moyens pour transférer de la chaleur sont constitués par au moins un anneau (30) creux fermé rempli par un liquide, ledit anneau (30) se composant d'une succession de segments (30a, 30b, 30c) inclinés par rapport à l'horizontale (31), des moyens de fixation dudit anneau sur l'une des faces de ladite virole (14a), et des moyens pour assurer un contact thermique entre chacun desdits anneaux et ladite virole (14a), des vases d'expansion (35) étant prévus aux points les plus hauts des segments inclinés.

2. Dispositif selon la revendication 1, caractérisé en ce qu'il comporte plusieurs anneaux creux répartis sur la hauteur de la virole et décalés angulairement les uns par rapport aux autres.

3. Dispositif d'homogénéisation des températures selon la revendication 2, caractérisé en ce que le liquide remplissant l'anneau creux est du sodium.

4. Dispositif d'homogénéisation dans le sens circonférentiel des températures à la surface d'une virole (14a) à axe vertical d'un composant traversant la dalle supérieure (4) d'un réacteur nucléaire, un écoulement montant de gaz chaud déterminant des zones chaudes, et un écoulement descendant de gaz refroidi déterminant des zones plus froides, comprenant des moyens (30, 50) fixés sur l'une des faces de la virole pour transférer de la chaleur d'une zone chaude de la virole (14a) à une zone plus froide de cette virole, ces zones étant situées sur une même circonférence, caractérisé en ce que les moyens pour transférer de la chaleur sont constitués par au moins un ensemble formant caloduc décrivant la totalité de la circonférence de ladite virole pour assurer l'homogénéisation des températures de ladite virole au niveau dudit ensemble, des moyens pour fixer le ou lesdits ensembles formant caloduc sur la face interne de ladite virole, et des moyens pour assurer un contact thermique entre le ou lesdits ensembles formant caloduc et ladite virole.

5. Dispositif selon la revendication 4, caractérisé en ce qu'il comprend une pluralité d'ensembles formant caloducs, chaque ensemble étant horizontal et ayant la forme générale d'un anneau, lesdits ensembles étant répartis sur la hauteur de ladite virole.

6. Dispositif selon la revendication 5, caractérisé en ce que chaque ensemble formant caloduc est constitué par un caloduc faisant sensiblement la circonférence de ladite virole.

7. Dispositif selon la revendication 5, caractérisé en ce que chaque ensemble formant caloduc est constitué par une pluralité de caloducs placés bout à bout, dont l'ensemble recouvre la totalité de la circonférence de ladite virole.

8. Dispositif selon la revendication 5, caractérisé en ce que chaque ensemble formant caloduc est constitué par deux anneaux de caloducs disposés l'un au-dessus de l'autre, chaque anneau consistant en une pluralité de caloducs mis bout à bout, les caloducs d'un anneau étant décalés angulairement par rapport à ceux de l'autre anneau.

9. Dispositif selon la revendication 4, caractérisé en ce qu'il est constitué par une pluralité de caloducs disposés bout à bout, chaque caloduc présentant une pente par rapport à l'horizontale, les ensembles des caloducs formant ainsi une hélice à plusieurs filets.

10. Dispositif selon l'une quelconque des revendications 6 à 9, caractérisé en ce que lesdits caloducs contiennent du mercure ou de l'eau.

11. Dispositif selon l'une quelconque des revendications 6 à 10, caractérisé en ce que lesdits caloducs qui sont de forme cylindrique incurvée sont fixés sur la face interne de ladite virole par des pontets afin d'assurer le contact thermique entre les caloducs et la virole.

12. Dispositif selon l'une quelconque des revendications 6 à 8, caractérisé en ce que lesdits caloducs sont logés dans des pièces formant godets fixés sur ladite virole, lesdits godets étant remplis par un matériau bon conducteur de la chaleur.

13. Dispositif selon l'une quelconque des revendications 6 à 10, caractérisé en ce que lesdits caloducs comportent une semelle disposée selon leur longueur, ladite semelle étant soudée sur ladite virole.

14. Dispositif selon l'une quelconque des revendications 6 à 9, caractérisé en ce que lesdits caloducs sont logés dans un espace annulaire étanche limité par ladite virole et par une deuxième virole interne à la première, et en ce que ledit dispositif comprend des moyens pour introduire dans ledit espace un matériau à bas point de fusion et bon conducteur thermique.

**Claims**

1. Device for reducing circumferential temperature gradients around the surface of a sleeve (14a), whose axis is vertical, around a component passing through the upper slab (4) of a nuclear reactor, a rising current of hot gas providing hot zones and a descending current of cooled gas providing cooler zones, comprising means (30, 50) fixed to one of the faces of the sleeve to transfer heat from a hot zone of the sleeve (14a) to a cooler zone of that sleeve, said zones being located at the same level, characterized in that the heat transfer means comprise at least one closed hollow liquidfilled ring (30), said ring (30) comprising a plurality of sections (30a, 30b, 30c) inclined with respect to the horizontal (31) means for fixing the said ring to the said face of the said sleeve (14a), and means to provide thermal contact between each of said rings and said sleeve (14a), expansion vessels (35) being provided at the highest points of the inclined ring-sections.

2. Device according to Claim 1, characterized in that it comprises a plurality of hollow rings vertically distributed over the height of the sleeve and staggered angularly with respect to one another.

3. Temperature gradient-reduction device according to Claim 2, characterized in that the liquid filling the hollow rings is sodium.

4. Device for reducing circumferential temperature gradients around the surface of a sleeve (14a), whose axis is vertical, around a component passing through the upper slab (4) of a nuclear reactor, a rising current of hot gas providing hot zones and a descending current of cooled gas providing cooler zones, comprising means (30, 50) fixed to one of the faces of the sleeve to transfer heat from a hot zone of the sleeve (14a) to a cooler zone of that sleeve, said zones being located at the same level, characterized in that the heat transfer means comprise at least one heat pipe assembly describing the entire circumference of said sleeve to reduce temperature gradients in said sleeve at the level of said assembly, means to fix the said heat pipe assembly or assemblies to the internal face of said sleeve, and means to provide thermal contact between the said heat pipe assembly or assemblies and said sleeve.

5. Device according to Claim 4, characterized in that it comprises a plurality of heat pipe assemblies, each assembly being horizontal and of generally annular form, said assemblies being vertically distributed over the height of the sleeve.

6. Device according to Claim 5, characterized in that each heat pipe assembly comprises a single heat pipe extending substantially completely around the circumference of the sleeve.

7. Device according to Claim 5, characterized in that each heat pipe assembly comprises a plurality of heat pipes, placed end to end and extending completely around the circumference of the screen.

8. Device according to Claim 5, characterized in that each heat pipe assembly comprises two rings of heat pipes, disposed one above the other, each ring comprising a plurality of heat pipes placed end to end, the heat pipes of one ring being staggered angularly with respect to those of the other ring.

9. Device according to Claim 4, characterized in that it comprises a plurality of heat pipes placed end to end, each heat pipe being at an angle to the horizontal, whereby the heat pipe assembly forms a helix with a plurality of turns.

10. Device according to any one of Claims 6 to 9, characterized in that the said heat pipes contain mercury or water.

11. Device according to any one of Claims 6 to 10, characterized in that said heat pipes, in the form of curved cylinders, are fixed to the internal face of the said sleeve by bridges providing thermal contact between the heat pipes and the wall.

12. Device according to any one of Claims 6 to 8, characterized in that said heat pipes are located in gutters fixed to the said sleeve, said gutters being filled with a material of good thermal conductivity.

13. Device according to any one of Claims 6 to 10, characterized in that said heat pipes comprise a lengthwise flange, said flange being welded to said sleeve.

14. Device according to any one of Claims 6 to 9, characterized in that said heat pipes are located in a closed annular space between said sleeve and a second sleeve inside the first, and in that said device comprises means to introduce into said space, a material of low fusion point and good thermal conductivity.

## Ansprüche

1. Vorrichtung zum Homogenisieren von Temperaturen in Umfangsrichtung an der Oberfläche eines Mantels (14a) mit vertikaler Achse für ein Bauteil, welches die obere Decke (4) eines Kernreaktors durchquert, wobei ein steigender Strom von warmem Gas warme Bereiche bestimmt und ein fallender Strom von gekühltem Gas kältere Bereiche bestimmt, mit Einrichtungen (30, 50), welche an einer der Flächen des Mantels befestigt sind, um die Wärme eines warmen Bereiches des Mantels (14a) auf einen kälteren Bereich dieses Mantels zu übertragen, und wobei diese Bereiche auf demselben Umfang sitzen, dadurch gekennzeichnet, daß die Einrichtungen zum Übertragen der Wärme von mindestens einem geschlossenen Hohlring (30) gebildet sind, der mit einer Flüssigkeit gefüllt ist, wobei der Hohlring (30) aus einer Folge von Segmenten (30a, 30b, 30c) zusammengesetzt ist, welche bezüglich der Horizontalen (31) geneigt sind, von Befestigungseinrichtungen des Ringes auf einer der Flächen des genannten Mantels (14a), und von Einrichtungen zum Sicherstellen des thermischen Kontakts zwischen jedem der genannten Ringe und dem Mantel (14a), wobei Expansionsbehälter (35) an den höchsten Punkten der geneigten Segemente vorgesehen sind.

2. Vorrichtung nach Anspruch 1, dadurch gekennzeichnet, daß sie mehrere Hohlringe umfaßt, welche über die Höhe des Mantels verteilt sind und winklig zueinander versetzt sind.

3. Vorrichtung zum Homogenisierung von Temperaturen nach Anspruch 2, dadurch gekennzeichnet, daß die Flüssigkeit, mit der Hohlring gefüllt ist, Natrium ist.

4. Einrichtung zum Homogenisieren von Temperaturen in Umfangsrichtung an der Oberfläche eines Mantels (14a) mit vertikaler Achse für ein Bauteil, welches die obere Decke (4) eines Kernreaktors durchquert, wobei ein steigender Strom an warmem Gas warme Bereiche festlegt und ein fallender Strom an gekühltem Gas kühlere Bereiche festlegt, mit Einrichtungen (30, 50), welche an einer der Flächen des Mantels befestigt sind, um die Wärme des einen, warmen Bereich des Mantels (14a) auf einen kälteren Bereich dieses Mantels zu übertragen, und wobei die Bereiche auf ein- und demselben Umfang sitzen, dadurch gekennzeichnet, daß die Einrichtungen zum Übertragen der Wärme von mindestens einer Gruppe dargestellt sind, welche eine Wärmeleitung bilden, die die Gesamtheit des Umfangs des genannten Mantels umschreibt, um die Homogenisierung der Temperaturen des Mantels im Niveau der genannten Gruppe sicherzustellen, durch Einrichtungen zum Befestigen der Gruppe oder der genannten Gruppen, welche die Wärmeleitung bilden, auf der Innenfläche des genannten Mantels, und durch Einrichtungen, um den thermischen Kontakt zwischen der Gruppe oder den Gruppen, die die Wärmeleitungen bilden, und dem genannten Mantel sicherzustellen.

5. Einrichtung nach Anspruch 4, dadurch gekennzeichnet, daß sie eine Vielzahl von Gruppen umfaßt, die Wärmeleitungen bilden, wobei jede Gruppe horizontal verläuft und die allgemeine Form eines Ringes aufweist, und wobei die Gruppen über die Höhe des genannten Mantels verteilt sind.

6. Einrichtung nach Anspruch 5, dadurch gekennzeichnet, daß jede Gruppe, die eine Wärmeleitung bildet, von einer Wärmeleitung gebildet ist, welche im wesentlichen den Umfang des genannten Mantels einnimmt.

7. Einrichtung nach Anspruch 5, dadurch gekennzeichnet, daß jede Gruppe, die eine Wärmeleitung bildet, von einer Vielzahl von Wärmeleitungen gebildet ist, welche Ende an Ende angeordnet sind, wovon die Gruppe die Gesamtheit des Umfangs des genannten Mantels abdeckt.

8. Einrichtung nach Anspruch 5, dadurch gekennzeichnet, daß jede Gruppe, die eine Wärmeleitung bildet, von zwei Wärmeleitungsringen gebildet ist, die übereinanderliegend angeordnet sind, wobei jeder Ring aus einer Vielzahl von Wärmeleitungen besteht, die Ende an Ende angeordnet sind, und die Wärmeleitungen eines Ringes winklig bezüglich jenen des anderen Ringes versetzt sind.

9. Einrichtung nach Anspruch 4, dadurch gekennzeichnet, daß sie von einer Vielzahl von Wärmeleitungen gebildet ist, welche Ende an Ende angeordnet sind, wobei jede Wärmeleitung eine Neigung bezüglich der Horizontalen aufweist und die Gruppen der Wärmeleitungen somit eine Wendel mit mehreren Gängen bilden.

10. Einrichtung nach einem der Ansprüche 6 bis 9, dadurch gekennzeichnet, daß die Wärmeleitungen Quecksilber oder Wasser enthalten.

11. Einrichtung nach einem der Ansprüche 6 bis 10, dadurch gekennzeichnet, daß die Wärmeleitung oder die genannten Wärmeleitungen, die zylinderförmig gebogen sind, an der Innenfläche des Mantels durch brückenartige Bügel befestigt sind, um den Wärmekontakt zwischen den Wärmeleitungen und dem Mantel sicherzustellen.

12. Einrichtung nach einem der Ansprüche 6 bis 8, dadurch gekennzeichnet, daß die Wärmeleitung oder die Wärmeleitungen in Teilen angeordnet sind, welche kleine Behälter bilden, die am genannten Mantel befestigt sind, wobei die kleinen Behälter mit einem Material gefüllt sind, welches ein guter Wärmeleiter ist.

13. Einrichtung nach einem der Ansprüche 6 bis 10, dadurch gekennzeichnet, daß die Wärmeleitungen einen längs ihrer Längenerstreckung angeordneten Flansch aufweisen, der auf den genannten Mantel auflötet bzw. aufgeschweißt ist.

14. Einrichtung nach einem der Ansprüche 6 bis 9, dadurch gekennzeichnet, daß die Wärmeleitung oder die genannten Wärmeleitungen in einem dichten Ringraum angeordnet sind, der durch den genannten Mantel und einen zweiten Mantel innerhalb des ersten begrenzt ist, und daß die Einrichtung Mittel zum Einleiten eines Materials mit niedrigem Schmelzpunkt und guter Wärmeleitfähigkeit in den Ringraum aufweist.

FIG.1

FIG.2

FIG. 3

FIG.4

FIG.6c

FIG. 5a

FIG. 5b

FIG. 5c

FIG.7a

FIG.7b

FIG.6a

FIG.6b